# EUROPEAN PATENT APPLICATION

(11) **EP 2 236 944 A2**
(43) Date of publication of application: **06.10.2010**
(21) Application number: 09011122.0
(22) Date of filing: 31.08.2009
(51) Int. Cl.: F24D 3/14

(54) **Floor heating system**

(30) Priority: 26.03.2009 SE 0900385
(71) Applicant: KABE Husvagnar AB, 560 27 Tenhult (SE)
(72) Inventor: Ekström, Alf, 560 27 Tenhult (SE)

(57) **Abstract**

The invention regards a floor heating system based on hot water for the use in a caravan/motor home. Floor heating systems are including at least one heating source, for the heating of water together with heating pipes assembled in the caravan's/motor home's floor, for the transport of heated water from the heating source, outgoing heating source (4), and back to the heating source, return heating source (2).

At least one control (5), are organized in a matter to regulate the temperature of the heated water from the heating source, outgoing heating source (4), by mixing it with return water from the floor heating pipes, return heating pipes (1), before it's transported into the floor heating pipes, outgoing heating pipes (3).

## Description

### Technical area

Present invention regards a floor heating system based on hot water, for the use in a caravan or motor home. The floor heating system includes at least one heating source, for the heating of water together with heating pipes assembled in the caravan's/motor home's floor, to transport the heated water from the heating source, outgoing heating source, then back to the heating source, return heating source.

### Background of the technical solution

A heating system based on hot water in a caravan/motor home normally consists of two systems; radiators and floor heating. The floor heating is either run by electricity or hot water from a boiler with a built in water heater. In today's system, in the cases when the floor heating is run by hot water, the hot water is circulated parallelly in both of these systems, this means that the hot water intended for the radiators (+46°C and more) are also circulating in the floor heating system. The water temperature for radiators is normally higher than the water temperature for floor heating since the heat exchange is through convection and not through heat conduction.

As a result of this, high temperatures occur in some parts of the floor in caravans and motorhomes, and people and pets may find the floor uncomfortable to walk on.

Moreover, the whole system is based on these two parallel loops (radiators and floor heating), fed from the same boiler, where the boiler is controlled from a thermostat mounted in the upper parts of the caravan/motor home. When this thermostat measures a higher temperature in the surroundings then what it's adjusted for, it will turn off the water heater. Hence; the whole heating system is manoeuvred by this one thermostat. As a result of this, the boiler might shut off if the temperature rises in the upper parts of the caravan/motor home, when for example a lot of people are in the caravan/motor home at ones, which in turn makes the floor perceive as cold.

Accordingly; there are two main problems with today's system. The first are the difference in temperature between various parts of the floor, in some parts the temperature will be too high and in other parts the temperature will be too low. The other problem is that the floor can sometimes perceive as cold even though the rest of the caravan/motor home is very warm.

### Conclusion of the invention

The purpose of this invention is to produce a floor heating system, constructed in a way to eliminate or at least considerably reduce above mentioned problems.

Accordingly; there is a need of a floor heating system that produces a more even and comfortable temperature throughout the floor and, regardless to external factors, keep the same temperature over time.

This purpose can be attained through the invention with a floor heating system, as described before but with a control to regulate the temperature of the heated water from the heating source, outgoing heating source, by mixing it with the return water from the floor heating pipes, return heating pipes, before it's transported into the floor heating pipes, outgoing heating pipes.

By arranging a control to regulate the temperature of the water transported out to the floor heating pipes an even and comfortable floor heating will be attained.

By adapting the floor heating system to be used together with a conventional radiator heating system for caravan/motor home, a comfortable temperature in the caravan/motor home can be attained by adding warm water to the radiators in the caravan/motor home, when needed.

### Short description of the drawing

In the following the invention will be described with reference to the attached drawing.

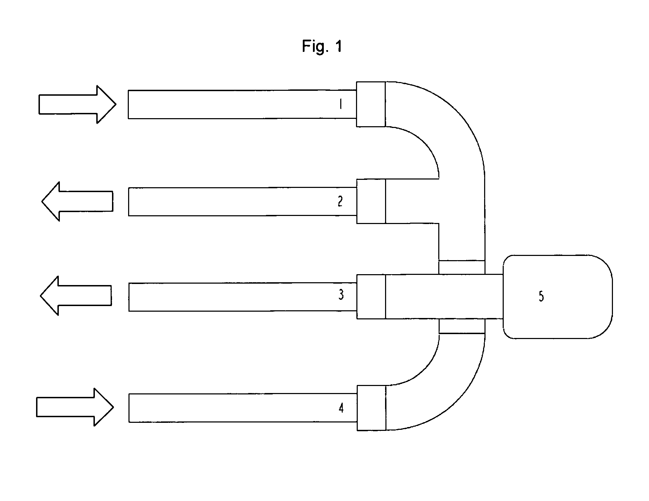

Figure 1 is a schematic sketch of how the floor heating system will work according to the invention.

### Description of the invention design

Figure 1 shows a principle sketch of a floor heating system according to the invention.

The floor heating system is based on hot water. The floor heating system consists of at least one heating source, for the heating of water, such as a boiler with a built-in water heater.

Heating pipes are assembled in the floor of the caravan/motor home. The heating pipes are assembled to transport heated water from the heating source, outgoing heating source (4), and back to the heating source, return heating source (2).

The floor heating system is further more consisting of at least one control (5). The control (5) may for instance be a shunt, such as a three-way temperature shunt. The control (5) may for instance be a three-way shunt with a built-in thermostat. The temperature shunt (5) may thus have a built-in thermostat. The temperature shunt (5) transports water with the temperature regulated by the thermostat in the shunt, into the floor heating system.

The shunt (5) will adjust the flow of water through the floor heating pipes and boiler. The shunt (5) will allow a part of the water circulating through the floor heating pipes to return to the floor heating pipes, return heating pipes (3), and mix with the hot water from the boiler, outgoing heating source (4), this will regulate the temperature of the water transported into the floor heating pipes, outgoing heating pipes (3), thus regulating the temperature of the floor heating system. The desired temperature will be achieved by mixing an appropriate part of the returning water.

The shunt (5) is organized in a matter to regulate the temperature of the heated water from the heating source, outgoing heating source (4), by mixing it with return water from the floor heating pipes, return heating pipe (1), before it's transported into the floor heating pipes, outgoing heating pipe (3).

The floor heating system, according to the invention, can be used in parallel with heating system provided by the radiators in a caravan/motor home. This in a way that the same heating source can be used, but the control of the two systems are individual

To create a heating system that gives a comfortable living comfort, without temperature gradients in the floor and with a constant temperature independent of external factors, has a system with two individually controlled heating systems been developed, one for the floor heating and one for the heat in the radiators. Even if the systems are controlled individually, the same heating source is being used to both of them. Where as before a boiler powered by electricity or gas is used as a heating source.

This system creates a generally lower and through time more constant temperature of the floor, which means that the temperature gradients in the floor decreases. Additional to this, the radiators may be used individually with a water of a higher temperature, then used in the floors, when needed. The control of the water to the radiators is, as earlier, made by a thermostat placed in the caravan/motor home.

The system will solve the problem of large temperature differences in the floor. This will increase the living comfort for the user, as less temperature gradient will arise both in the floor and in the caravan/motor home. Because of the lower temperature in the floor, the heat flow through the floor will decrease. This leads to a lower energy usage. The system will also increase the possibilities for the user to control the total heating system in the caravan/motor home.

## Claims

1. floor heating system based on hot water, for the use in a caravan or motor home, when the floor heating system includes;
a. at least one heating source, for the heating of water,
b. heating pipes, assembled in the floor of the caravan/motor home, for the transport of heated water from the heating source, outgoing heating source (4), and back to the heating source, return heating source (2).
***Characterized by**;*
At least one control (5), organized in a matter to regulate the temperature of the heated water from the heating source, outgoing heating source (4), by mixing it with return water from the floor heating pipes, return heating pipes (1), before it's transported into the floor heating pipes, outgoing heating pipes (3).

2. floor heating system as claim 1, when the control (5) is a three-way shunt with a built-in thermostat.

3. floor heating system as claims 1 or 2, when the floor heating system may be used parallel to a radiator heating system in a caravan or motor home, in a way that the same heating source is used for both of the systems but the systems are controlled individually.
